# EUROPEAN PATENT APPLICATION

(11) **EP 4 538 138 A1**
(43) Date of publication of application: **16.04.2025**
(21) Application number: 23203506.3
(22) Date of filing: 13.10.2023
(51) Int. Cl.: B60W 50/14, B60W 60/00

(54) **METHOD, CONTROLLER AND SYSTEM FOR ADAPTING INTERIOR CONDITIONS IN AN AUTONOMOUS DRIVING VEHICLE, AS WELL AS CORRESPONDING VEHICLE**

(71) Applicant: Volvo Car Corporation, 40531 Göteborg (SE)
(72) Inventor: ÖDBLOM, Anders, 475 37 Bohus-Björkö (SE); FEI, Zhennan, 417 55 Göteborg (SE)
(74) Representative: Nederlandsch Octrooibureau

(57) **Abstract**

The invention relates to a method for adapting vehicle interior conditions during autonomous driving, comprising determining (12) there will be or has been a change in autonomous driving conditions, and adjusting (24, 36) at least one interior feature (72, 74, 75) of the vehicle according to the change or anticipated change in autonomous driving conditions. This adjustment can either physically adjust an interior feature and/or adjust the permissible settings of such a feature. The invention further relates to a corresponding controller, system and vehicle.

## Description

### Technical Field

The current invention relates to autonomous driving, and to enhancing a safe, comfortable and convenient experience for a user and/or others in an autonomous driving vehicle.

### Background Art

The operational design domain (hereinafter "ODD") of an autonomous driving vehicle (hereinafter "ADV") describes the various designed operational conditions in which the ADV is allowed to operate. The ODD can typically be characterized by a number of features including (but not limited to) the allowed speed range of the ADV and the geographical area where it is approved to drive in the respective ODD (e.g., on certain road segments or road types such as highways, entry and exit areas, country roads, intersections, urban and so forth). An ODD may also be limited by one of the following: light conditions (e.g., only daytime driving), weather conditions (e.g., not rain), traffic and roadway conditions, and the probability to meet vulnerable road users (hereinafter "VRUs"). These are only examples of conditions to define an ODD, and ODD conditions are not limited to these examples, but can be any condition setting out the operating parameters for the autonomous driving system for a vehicle. Such ODD conditions set out predefined parameters to ensure safety and proper performance of the ADV.

An ADV may be operational within an approved ODD, or set of approved ODD conditions if it is allowed to operate across several different ODD conditions. ADV's are increasingly becoming capable of and therefore approved to operate over larger and larger sets of ODD conditions as it is shown the ADV can safely handle such ODD conditions. Each ODD or ODD condition may be associated with a safety or risk value reflecting the risk that the user or other traffic participants may be exposed to within that ODD. The risk value could, for example, involve the risk of collisions or injuries but may also account for other aspects. Thus, the setting of operational ODD conditions for a specific vehicle ensures that risk values remain within an acceptable range.

### Summary of Invention

The methods and systems of the current application relate to adjusting vehicular interior features and/or settings, and in some cases exterior features and/or settings, according to a change in the autonomous driving condition (e.g., ODD condition or environmental conditions outside of the vehicle) in which the vehicle is operating.

As ADV's increasingly are able to drive themselves for extended durations of time and over larger geographical areas, they need to be able to handle a larger set of discrete ODD conditions. This means such a vehicle will encounter many different conditions, from long stretches of relatively simple highway driving to urban driving with many different potential risks (e.g., other vehicles, pedestrians, etc.). To maintain risk at an acceptable level through a change in ODD condition for the ADV, the methods and systems of the current application adjust vehicular interior settings according to the change in the ODD in which the vehicle is operating, or changing conditions within the present ODD, providing the user with a comfortable, convenient and safe experience over a number of autonomous driving conditions. In some cases this can also include or relate to some exterior features of the vehicle.

According to a first aspect, a method for adapting vehicle interior conditions during autonomous driving comprises determining there will be or has been a change in autonomous driving conditions; and adjusting at least one interior feature of the vehicle according to the change or anticipated change in autonomous driving conditions. Such a method allows for an ADV to be able to drive itself for extended durations of time and handle larger geographical areas which includes changing between discrete ODD conditions during such drives while maintaining passenger comfort and safety. By adjusting one or more interior features according to a change in autonomous driving conditions, the ADV occupant or user can be comfortable but ready to respond to the risks associated with the autonomous driving condition in which the ADV is in or changing to at any time, including throughout such changes in the autonomous driving conditions. This helps to provide a convenient, comfortable and safe experience for the user during the changing of autonomous driving conditions.

The step of determining there will be or has been a change in autonomous driving conditions could be done in a number of different ways, for example, through a control system which receives information from sensors on or in the vehicle, through the time of day, through geographic positioning and/or navigation systems (e.g., global positioning system "GPS" location data), traffic data, weather data, etc. The control system could use the information or data to determine that there will be a change from a first autonomous driving condition to a second autonomous driving condition. Then the step of adjusting at least one interior condition could be performed by, for example, referencing a database which describes the acceptable interior conditions associated with the first autonomous driving condition and the second autonomous driving condition, and adjusting the interior conditions to those associated with the second autonomous driving condition.

According to an embodiment, the step of determining there will be or has been a change in autonomous driving conditions comprises determining there has been or will be a change in an operational design domain (ODD) in which the vehicle is operating. Optionally, this comprises adjusting at least one interior feature of the vehicle according to the operational design domain to which the vehicle has or will be changed.

Typically an ADV is associated with a discrete set of ODD conditions which relate to autonomous driving conditions in which the ADV can safely and capably operate. Each ODD for an autonomous driving system is typically well-defined, including what kind of non-driving activities a user can and cannot do when the unsupervised autonomous driving features are activated. As discussed in the background, each discrete ODD can be associated with one or more of: an allowed speed range; a specific geographical area or road segment; light conditions, weather conditions, the probability to meet vulnerable users, or other driving and/or environmental conditions. Thus, for example, when moving from highway driving to urban driving, the ADV can experience a change in ODD condition, moving from a first ODD related to highway driving to a second ODD related to urban driving. The settings and/or permitted settings of vehicle interior features can then be adjusted according to this change in ODD condition. This can include, for example, movement of any of the steering wheel, accelerator and brake pedals, seats, tables and arm rests, display screens and entertainment systems, which may need to change positions and/or settings when the ODD condition changes during the drive. Such adjustments can, for example, include limits on the boundaries for the driving position related settings when autonomous driving mode is activated in certain ODD conditions to prevent undesired or unsafe activities. When a driver takeover is needed, the method can then automatically restore user preferred driving settings to the desired driving positions for user to perform a quick takeover. The adjusted settings will make it particularly easy and fast for any driver takeover to happen.

For example, on a smooth long-distance highway the ODD may allow the user to lay down horizontally either in their seat or in a bed-like compartment to sleep. However, when the ADV arrives in an urban area and switches to the ODD condition related to urban driving, the user may be required to sit up in the driver's seat to be more prepared to drive if needed, or simply for safety reasons (e.g., to wear a seatbelt). Thus, the interior features and/or interior settings for the seat and/or a bed compartment can shift when switching from the first ODD condition related to highway driving to the second ODD condition related to urban driving, for example, moving the seat from a horizontal lying position to an upright position in which the user is able to wear a seatbelt and operate the steering wheel and/or pedals if needed.

Additionally, as vehicle and autonomous driving technology improves, ADV's can handle more and more ODD conditions. The methods here allow for adjustment of interior features and/or settings according to the ODD conditions of the specific ADV at any time. As features and capabilities of ADV's adjust, so too can the allowed settings and/or adjustments be adjusted to accommodate the new capabilities. For example, a power seat might not be allowed to move backwards so that the braking and gas pedals cannot be reached when a first version of an ADV is launched with limited ODD condition capabilities. Gradually, with the functioning becoming better and the autonomous driving system being able to handle more ODD conditions without intervention, the permitted interior settings can be adjusted to allow the user to lie down in the seat. Such a system allows for adjustment of interior features and/or settings according to the safety and capabilities of the system without necessarily needing any physical changes to the system.

According to an embodiment, the step of determining there will be or has been a change in autonomous driving conditions comprises determining there has been or will be a change in environmental conditions outside of the vehicle during autonomous driving which sometimes will result in a change in an operational design domain in which the vehicle is operating or can simply be a change in environmental conditions without a change in ODD condition. Optionally, the environmental conditions relate to one or more of: traffic conditions, road conditions, light conditions, statistics related to certain stretches of roads, and pedestrian and/or non-vehicular activity. Such a change in autonomous driving conditions can affect the acceptable interior settings of the ADV (whether there is a change in ODD condition or not), and adjusting settings according to the change in autonomous driving conditions can result in a more comfortable as well as safer experience for the user and any passengers in the ADV.

In cases where environmental conditions are changes but the driving remains within the same ODD condition, it can be preferable to adapt interior settings according to capabilities of the ADV in such environmental conditions, for example, depending on the real-time environment in terms of traffic, road and light conditions, the statistics for specific stretches of roads (e.g., exposure to the incidents).

According to an embodiment, interior features and/or settings can be adjusted according to changing conditions of the ADV itself. For example, if a component of the ADV fails, interior features could be adjusted according to an ADV entering degraded mode and any associated features can be adjusted to make driving in such a mode safer and/or more comfortable.

According to an embodiment, adjustments can at least partially involve exterior systems of the vehicle. For example, side mirrors can be folded in for autonomous driving modes. In other embodiments, a height of the vehicle can be reduced when adjustments are made to a sleeping mode, which can result in less drag and therefore more efficient operation during autonomous driving in some ODD conditions and/or autonomous driving conditions.

According to an embodiment, the step of adjusting at least one interior feature of the vehicle comprises adjusting one or more of the following: steering wheel, pedals, seats, tables, arm rests, lighting, display screens and entertainment systems. Each of these could be adjusted according to the change in autonomous driving conditions and/or ODD condition. The specific adjustment would relate to the comfort and safety of the user and/or passengers in the new or upcoming autonomous driving condition and/or ODD condition, and could include things like moving the steering wheel and/or pedals closer to or farther away from the user, adjusting the seat from a driving position to another position (e.g., lying or facing other passengers), bringing out or putting away arm rests, tables, display screens and/or entertainment systems. Adjusting lighting could be done to allow for easier viewing of the road or other features outside of the vehicle, or to more comfortably provide lighting at different times of night or day. These are examples of interior features that can be adjusted as well as possible adjustments, however, many different interior features and/or adjustments could be made depending on the vehicle and/or autonomous driving conditions (including ODD conditions).

According to an embodiment, the step of adjusting at least one interior feature of the vehicle comprises adjusting permitted settings of one or more of the following: steering wheel, pedals, seats, tables, arm rests, lighting, display screens and entertainment systems. In this embodiment, the interior feature(s) may not be adjusted directly, but instead the permitted settings of the specific feature are adjusted such that the user may only use specific settings according to the autonomous driving conditions. For example, when it is determined that there has been or will be a change in driving conditions from driving at night with it being dark outside to driving in the daylight, the lighting in the vehicle may change settings such that a user may adjust the lighting levels higher during night-time driving than in daytime driving, but the user is able to make the adjustments him or herself only if desired. This is useful as the user may in some cases want a brighter light to read at night, or in other cases may desire a darker interior for sleeping. Adjusting the permissible settings not only keeps the vehicle comfortable and safe for the user, but allows the user to adjust to their desired preferences within the permitted ranges at any given time.

According to an embodiment, the method further comprises, prior to the step of adjusting at least one interior feature of the vehicle according to the change or anticipated change in autonomous driving conditions, informing the user that at least one interior feature of the vehicle will be adjusted and/or making a proposal to the user for adjustment of at least one interior feature of the vehicle according to the change or anticipated change in autonomous driving conditions. Optionally, this can include receiving input from the user on whether to proceed with the proposal or not. By informing and/or making such a proposal (and in some cases accepting user feedback to proceed or not), the user is forewarned of the upcoming proposed interior changes and can prepare appropriately. Such informing/proposal can be verbal, presented on a user interface, haptic, through another device (e.g., mobile phone or watch) and/or in any other manner in which the user can be presented with the information and/or proposal. Any feedback could be given in any manner as well, including through a user interface or button, verbal, through another device (a mobile phone or watch), etc. Such a proposal informs and guides the user through the change in autonomous driving conditions and associated adjustment of one or more interior conditions, helping the user to better understand what is happening during the changes and in some cases have autonomy to decide to proceed or not with proposed adjustments to interior features. Such a warning informing the user can be especially useful in an urgent or emergency situation when the features need to be changed very quickly. In some embodiment, such emergency situations could can also involve more severe warnings (e.g., louder sounds) to ensure the user is alerted quickly.

According to a further aspect, a control system is configured to perform any of the methods previously described. Such a control system could be within the ADV or located elsewhere and controlling vehicle systems and/or settings though, for example, a wireless communications system. The control system could also be connected to other systems (e.g., vehicle sensors, GPS data, weather reporting systems), which can help with the step of determining that there will be or has been a change in autonomous driving conditions. Such a control system helps to provide a more comfortable, convenient and safe experience for users of autonomous driving vehicles even through changes in autonomous driving conditions.

According to a further aspect, an autonomous driving system comprises an autonomous driving vehicle control system configured to operate a vehicle in a plurality of autonomous driving conditions, and at least one interior vehicle feature which is directly adjustable and/or has adjustable permitted settings. The autonomous driving vehicle control system is configured to determine there will be or has been a change in autonomous driving conditions; and adjust at least one interior vehicle feature directly and/or adjust permitted settings of at least one interior vehicle feature based on the change in autonomous driving conditions. Such a system allows for a safe, convenient and comfortable experience for the user, adjusting the interior and/or allowable interior settings of the vehicle according to the specific autonomous driving conditions at the time, including at a time of change of conditions.

According to an embodiment, the plurality of autonomous driving conditions relate to operational design domain conditions (ODD conditions) and/or environmental conditions (e.g., any conditions outside of the vehicle). Possible ODD conditions and environmental conditions have been discussed in detail above, and are applicable here as well. By the ADV being able to drive in a plurality of discrete ODD conditions and/or environmental conditions, and having specific interior vehicle settings associated with each, the autonomous driving system can provide the user a more customized and comfortable experience without sacrificing safety aspects.

According to an embodiment, the at least one interior vehicle feature comprises one or more of: steering wheel, pedals, seats, tables, arm rests, lighting, display screens and entertainment systems. Such systems and/or components can be adjusted, brought out, put away, etc. according to the specific change in autonomous driving conditions, giving users a comfortable and convenient experience while maintaining safety aspects as autonomous driving conditions change.

According to an embodiment, the system further comprises a user interface configured for one or more of: informing a user of an upcoming adjustment of at least one interior vehicle feature; providing a proposal to a user of one or more available adjustment(s) within the current or upcoming autonomous driving conditions; allowing a user to accept or reject a proposal; and guiding a user through a change or upcoming change. Such a user interface could be, for example, a screen, a touch screen, an application on a separate device (e.g., mobile telephone or watch), buttons, a verbal or haptic interaction area, or any other appropriate system to enable communication with a user. By providing a user information, guidance and/or a proposal, the user is better able to understand and prepare for what is to happen. For example, if an entertainment system is available for use for a particular ODD condition and the user is informed that the vehicle will be changing to an ODD in which an entertainment system is not permitted, the user is given time to stop the entertainment (e.g., saving video game progress) prior to the change which puts the entertainment system in a storage position for the new ODD condition.

According to an embodiment, the vehicle is associated with at least a first discrete autonomous driving condition and a second discrete autonomous driving condition, e.g., first and second operational design domain conditions. The first discrete autonomous driving condition is associated with a first range of allowable interior vehicle settings and the second discrete autonomous driving condition is associated with a second range of allowable interior vehicle settings. Upon changing from the first discrete autonomous driving condition to the second discrete autonomous driving condition, the vehicle changes or suggests a change from the first range of allowable interior vehicle settings to the second range of allowable interior vehicle settings. By associating particular (allowable) interior vehicular settings with specific ODD conditions, the system is able to allow for a more convenient and comfortable experience for a user, permitting a wider range of interior settings when it is deemed safe to do so but ensuring that the settings adjust appropriately as autonomous driving conditions change to ensure that safety is maintained throughout all conditions. Additionally, this allows for specific permitted settings to easily change as vehicles and systems advance to be able to safely autonomously drive throughout more complicated conditions. The system is able to adjust the associated permitted settings accordingly as vehicular capabilities increase (or in some cases decrease when there is a defect in a particular system or component).

According to a further aspect, a vehicle comprises the system and/or the controller previously described and/or is configured to perform any of the methods previously described. Such a vehicle provides a comfortable and convenient interior for users, even when changing ODD and/or autonomous driving conditions.

### Brief Description of Drawings

Figure 1 illustrates a method for adapting vehicle interior conditions during autonomous driving;
Figure 2 schematically illustrates an example of an autonomous driving system with adjustable interior conditions;
Figure 3A illustrates a schematic vehicle interior with a first interior condition; and
Figure 3B illustrates the schematic vehicle interior of Fig. 3A with a second interior condition.

### Description of Embodiments

The following is a description of certain embodiments of the invention, given by way of example only and with reference to the figures.

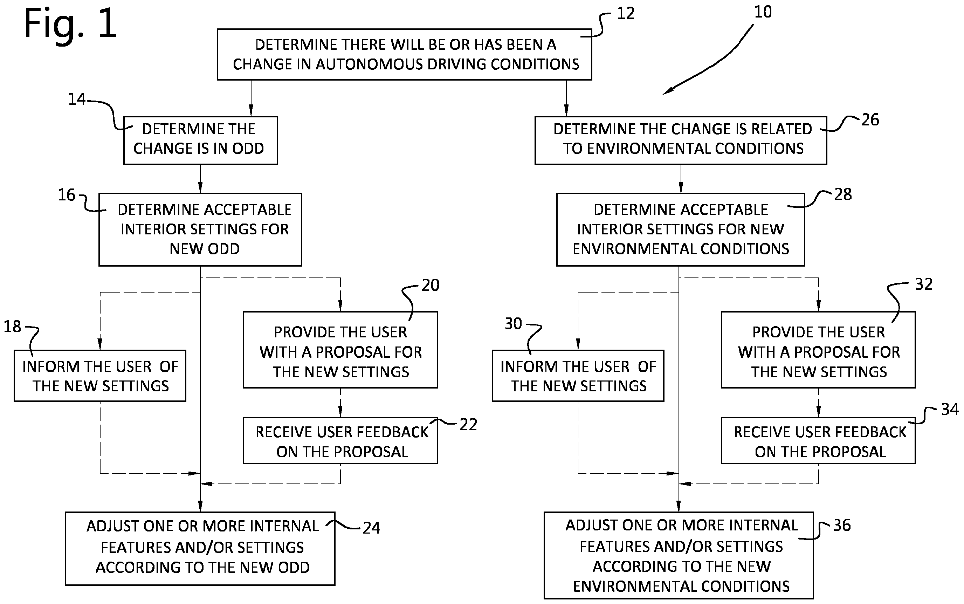

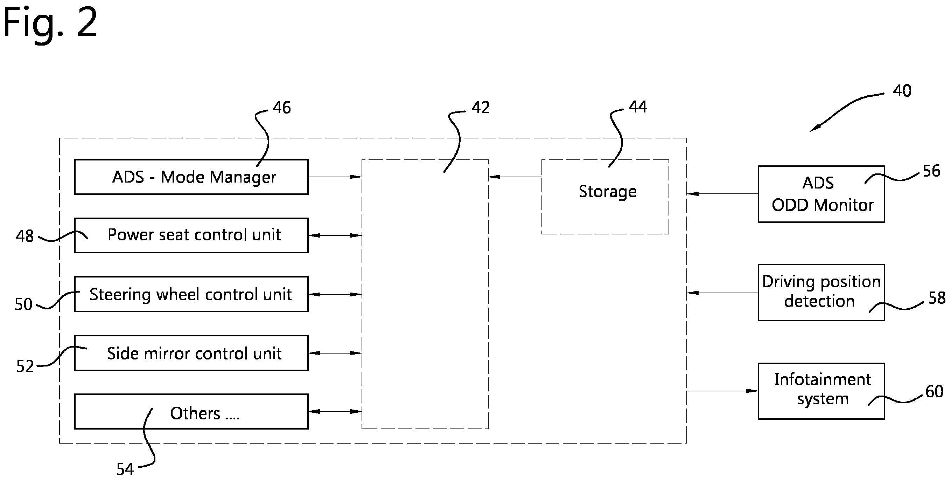

Figure 1 illustrates a method 10 for adapting vehicle interior conditions during autonomous driving; and Figure 2 schematically illustrates an example of an autonomous driving system 40 able to perform such a method 10.

Autonomous driving system 40 (hereinafter "ADS") is shown schematically as an example system diagram in Figure 2, which includes the necessary software and hardware components for performing method 10 set out in Figure 1, and includes control system 42 (e.g., central processing unit, electronic control unit), storage 44, ADS Mode Manager 46, power seat control unit 48, steering wheel control unit 50, side mirror control unit 52, other interior feature(s) control unit 54, ADS ODD monitor 56, driving position detection system 58 and infotainment system 60. ADS ODD monitor 56, driving position detection system 58 and infotainment system 60 are shown as external components which feed into the vehicle system, but could be part of the system in the vehicle in some embodiments.

Control system 42 receives inputs from all other systems, and uses that, in combination with the data and software in storage 44, to execute method 10 and control the interior features and/or settings according to the autonomous driving conditions and/or ODD condition. Control system 42 can receive signals and/or information, and can also send signals for the control of such separate systems. This can be wirelessly or through wired connections.

ADS mode manager 46 indicates in the human-machine interface that autonomous driving is activated (or not). The interface can be, for example, a user interface in the form of a touchscreen or any other interface which can display information. ADS mode manager 46 can be related to specific versions of the ADS, which can be updated as needed or desired throughout the vehicle and system lifetime.

Some systems can include a health monitor that monitors the health of the ADV, for example, alerting to any failure conditions. Thus, the system is able to respond to and adjust conditions and/or settings according to such a detected failure.

Power seat control unit 48, steering wheel control unit 50, side mirror control unit 52, and other feature(s) control unit 54 are systems which specifically control physical settings or available settings of the specific respective component, and which are typically adjustable by the user. Examples of other systems which can be controlled by other feature control units 54 are beds, tables, lamps, entertainment units, screens, dining etc. For example, the power seat control unit 48 controls the adjustable settings of the seat, particularly the user or driver seat adjustment and can receive input from the user to adjust. This can mean that in some autonomous driving conditions and/or ODD conditions, power seat control unit 48 adjusts the seat to lie flat or allows for such adjustment (e.g., for sleeping) whereas in other autonomous driving conditions and/or ODD conditions, the power seat control unit 48 is controlled by control system 42 to adjust the seat to a position where the user could take control of the steering wheel and/or pedals if necessary and prevents adjustment of the seat to a lying down position. Any of the control units and/or systems discussed or shown herein can include one or more actuators to move and/or reconfigure settings, one or more sensors to measure interior configurations and positions for monitoring and control during interior adaptations and/or adjustments and/or to monitor vehicle exterior and/or interior conditions.

ADS ODD monitor 56 can be used, sometimes in combination with a navigation system, to predict and/or plan ODD conditions for specific routes. In some embodiments, this could include predicting and/or planning for specific autonomous driving conditions, for example, safety or risks within a current or upcoming ODD condition which may influence the control and/or adjustment of interior vehicle settings. ADS ODD monitor 56 can include or be in communication with one or more sensors to help determine the ODD condition (including detecting any changes in ODD condition), as well as for detecting and monitoring vehicular interior and/or exterior conditions.

Driving position detection 58 can store the desired settings for driving, which can be predefined by a user and/or detected by internal sensors. These can be stored in storage 44 such that the vehicle can revert to the desired driving position settings of the user when moving out of autonomous driving mode or into an ODD condition or mode in which the user needs to be available for taking over if needed.

The system could also include a GPS system or other position detection or navigation system to detect where the vehicle is at any given time and give that information to the control system 42. This can help to determine a change or upcoming change in the ODD condition and/or autonomous driving condition for ADS 40, for example, when road conditions result in a change in ODD condition and/or autonomous driving conditions.

Infotainment system 60 is for conveying messages and/or warnings to a user, and typically involves some form of user interface. In some embodiments, infotainment system 60 can involve entertainment (e.g., television shows or movies) and/or gaming systems which are available for the user in some specific ODD conditions and/or autonomous driving conditions. Such systems are typically only available in autonomous driving conditions or ODD conditions in which the user is not needed to monitor driving and/or be available to perform manual driving actions. In such autonomous driving conditions or ODD conditions, the control system 42 can present or make available infotainment system(s) 60 to the user. In some embodiments, this can include physically presenting and/or removing screens for the infotainment system, placing them in an inaccessible storage location when in or changing to autonomous driving conditions or ODD conditions where such infotainment systems are not allowed for safety or comfort reasons.

Method 10 (see Fig. 1) shows an example method which can be performed by system 40. Method 10 starts with determining that there will be or has been a change in autonomous driving conditions (step 12). This can involve control system 42 receiving input either from a connected system (e.g., ADS mode manager 46, ADS ODD monitor 56 or a navigation system) or from storage 44 that there will be a change in autonomous driving conditions.

The change in autonomous driving conditions can be related to either a change in ODD conditions or in environmental conditions affecting driving within an ODD condition. If it is determined that the change is in ODD (step 14), control system 42 determines the acceptable interior settings for the new ODD. If it is determined that the change is in environmental conditions (step 26), control system 42 determines the acceptable interior settings for the new environmental conditions in step 28. Steps 26 and 28 typically use software loaded into control system 42, which takes ODD condition and/or environmental condition information (from steps 12, 14 and/or 26), location information and an optional confidence and/or risk value into account.

Typically, storage 44 includes a database which stores information about acceptable interior settings for all possible ODD conditions and/or autonomous driving or environmental conditions for the specific vehicle and ADS (e.g., with reference toward the specific version of the ADS currently in use/installed in the vehicle) as well as storage for the compiled software program implementing the methods. Thus, when system 40 determines (or is notified) that there will be or has been a change, control system 42 can determine the acceptable interior settings for the new ODD condition (step 16) or new environmental conditions (step 28) by looking at the information in storage 44 in combination with any other inputs.

Some embodiments can additionally calculate a confidence value to indicate how capable the ADS is to handle specific (sometimes estimated) conditions (e.g., weather, traffic) without needing a takeover from the user, and use this input to determine acceptable interior settings for new conditions. For example, if a route is given from point A to point B, ADS ODD monitor 56 can calculate a confidence value indicating how well the ADS can handle the estimated traffic and weather without needing a takeover from the user. Alternatively, or in addition with confidence value calculated, a safety or risk value may be used to characterize the risk within the present or coming ODD or environmental conditions, and the control system 42 can use these as inputs to adjust the interior settings or acceptable range of interior settings of the vehicle. The risk may account for the change in ODD condition and/or any risk to which the user or other traffic participants are exposed within the considered ODD condition. These risk values may, for example, be based on collision or injury risks but may also account for other aspects such as convenience or nausea. There may also be confidence values to describe the confidence in the estimated risk. In some embodiments, the risk and/or confidence values can include data from other vehicles, statistics for specific stretches of road (e.g., exposure to past incidents), real-time environmental conditions, etc.

After the method 10 has determined acceptable interior settings for the new ODD condition or environmental conditions (optionally taking into account confidence values and/or risk), ADS 40 moves on to the step of adjusting one or more internal features and/or settings according to the new ODD condition (step 24) or according to the new environmental conditions (step 36). This is done through control system 42 sending a signal to one or more system and/or component control systems (e.g., power seat control unit 48 and steering wheel control unit 50) to adjust the specific component.

Optional steps in each of these flows include informing the user of the upcoming new settings (steps 18, 30). This can be through a user interface or any other visual, audio or haptic means, and can be especially useful when upcoming changes are unexpected and/or will be taking place relatively quickly. For example, if sudden changes in weather require a change in ODD condition or change in environmental conditions (within the same ODD condition), and the user needs to quickly move from lying in a flat position to a position in which they could take control of the steering wheel, the user may be informed audibly that the seating position will change in a certain number of minutes or seconds. The user is then able to get up from the lying position and in some cases move to a different place to allow for the interior adjustments to happen comfortably and safely.

In some embodiments, the system provides the user with a proposal for new settings (steps 20, 32); and the user is optionally able to accept or reject the proposed settings (steps 22, 34). For example, when it is determined that the ODD condition will change to one for smooth highway driving and user intervention is unlikely to be needed, the vehicle can suggest setting up an entertainment console and bench for the user and any passengers to watch a movie or play games. The user is able to accept or reject this proposal, for example, on a user interface. The ADS control system 42 then either adjusts to the suggested proposal if accepted, or if rejected can simply adjust the acceptable settings to include the suggested proposal in case the user decides to change the settings to the proposal at a later time while still in the ODD condition (steps 24, 36).

Thus, method 10 adapts allowed ranges to the current (or shortly upcoming) autonomous driving condition and/or environmental conditions and/or the ODD condition; and a user cannot adjust seats, steering wheel, mirrors or any other settings to anything outside the acceptable ranges for that condition.

The system can also respond appropriately if ODD monitor 56 detects an exit or upcoming exit of autonomous driving mode. In such a situation, a handover request is sent and method 10 can restore all settings to the user's preferred settings for manual driving. When ODD monitor 56 detects a forthcoming or immediate change in the ODD condition or other environmental conditions that requires adaptations to the allowed safe and convenient vehicle settings, such settings will be changed and the interior of the vehicle will adapt accordingly based on control system 42 sending adjustment signals to other control units and/or additional systems. In some cases, adjustments can at least partially involve exterior systems of the vehicle as well, for example, folding in side mirrors and/or reducing the height of the vehicle (e.g., when adjustment is made to a sleeping mode) for less drag during autonomous driving in some ODD conditions and/or autonomous driving conditions.

Thus, system 40 and method 10 are able to adapt, limit and/or restore interior vehicle settings to ensure safe, comfortable and convenient interior settings even through changes in autonomous driving conditions and/or ODD conditions. Past systems could typically only move into and out of autonomous driving mode and physical adaptations were limited to exterior systems, for example, folding in of side mirrors when in autonomous driving mode. The current methods and systems provide ways of conveniently and (sometimes) automatically adjusting vehicle interior settings to give a comfortable but safe user experience during autonomous driving, and particularly when autonomous driving conditions and/or ODD conditions are changing. The system is also able to inform, guide and assist the user and other passengers during vehicle adaptations for a more comfortable, informed and confident user experience. This can help the user to prepare for changes and maintain confidence in the safety of the vehicle and systems.

Such methods and systems ensure that an ADV can drive itself for long periods of time and over larger geographical areas in which it will encounter very different discrete ODD conditions and/or environmental conditions, from long stretches of relatively simple highway driving to urban driving with many different potential risks (e.g., other vehicles, pedestrians, etc.). To maintain risk at an acceptable level through a change in ODD condition or environmental conditions for the ADV, the methods and systems of the current application are able to adjust vehicular interior settings according to the change in the ODD condition in which the vehicle is operating, or the changing conditions within the present ODD.

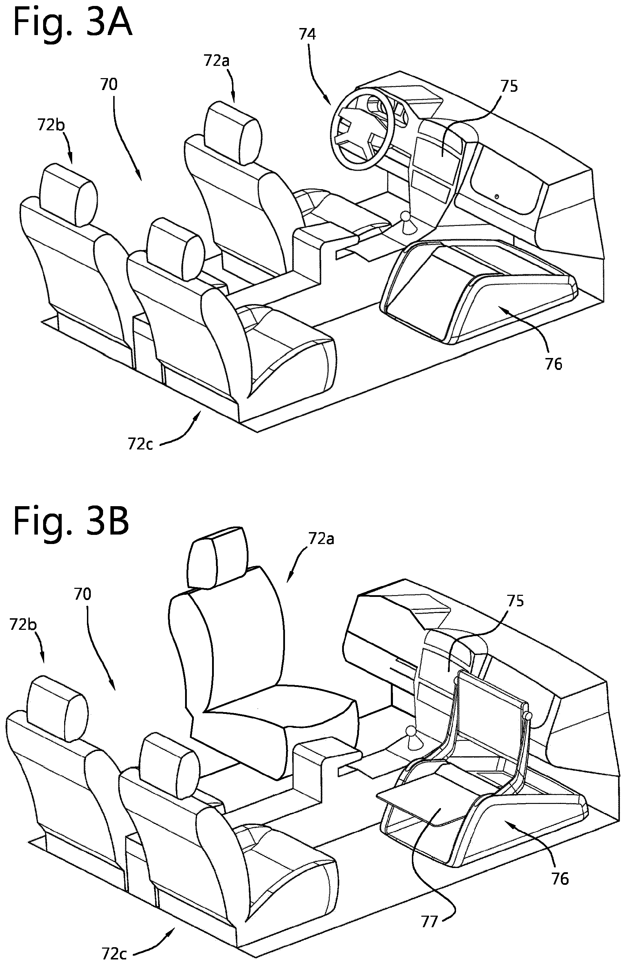

Figure 3A illustrates a schematic vehicle interior 70 with a first interior condition; and Figure 3B illustrates the schematic vehicle interior 70 with a second interior condition. Vehicle interior includes three seats 72a, 72b, 72c, steering wheel 74, user interface 75, and entertainment console 76.

Figure 3A could be an example of an interior configuration for an ODD condition where the user needs to be in a position to be able to quickly take over steering if needed, for example in busy urban driving. Thus, seat 72a is positioned forward-facing and steering wheel 74 is positioned to be accessible to the user sitting in seat 72a. Entertainment console 76 is closed and shifted to a position where it is not to be used.

Figure 3B shows the same interior 70 in a different configuration, for example, in a configuration for a different ODD condition in which the user is able to relax and not be immediately available for driving activities. This could be, for example, on highway driving. Thus, steering wheel 74 is put away, for example, positioned inside the dash, seat 72a is rotated to face entertainment console 76, and entertainment console 76 is opened up for us. Entertainment console 76 also includes tray 77, which can be used for storing snacks or drinks or anything else needed.

Such a change in configuration could be done through the methods described above, and information about the change and/or a proposal for the change from the configuration of Fig. 3A to 3B (or vice versa) could be displayed on user interface 75. The user could then confirm that they desired the change, or perhaps indicate another configuration within the allowed configurations for the current or upcoming ODD condition and/or autonomous driving condition that they desired on user interface 75. The vehicle interior 70 could then automatically adapt accordingly. These are just examples of interior configurations and changes that could be made, and the systems and methods described herein could have many different configurations and changes according to the vehicle, features, ADS, conditions, etc.

In summary, the systems and methods herein described allow for automatically detecting a change or upcoming change in ODD condition or environmental conditions, and then adapting one or more vehicle interior features and/or settings for such a change. By automatically detecting changes and adapting vehicle settings accordingly, the user is provided a comfortable and convenient experience while also ensuring that the interior features are safe and appropriate for the ODD condition and/or environmental conditions. The systems and methods can also provide good communication with, information to, and guidance of, the user prior to and during interior changes, ensuring that the user feels comfortable and well-informed during the process. This can be especially useful when quick changes are needed, allowing the user to quickly respond and prepare for the changes when needed for safety or comfort. Additionally, the methods and systems can be easily adapted as the capabilities of the ADV's increase, thereby allowing for more advanced adaptations during particular ODD conditions and/or environmental conditions as less user supervision is needed. Further, in such ODD conditions or autonomous driving conditions, the systems and methods provide the user notifications of the upcoming changes such that they can fully focus on other things and/or sleep when not needed for driving tasks, and can even suggest proposals to guide a user in possibilities for each condition, thereby providing a better overall experience for the user.

Those skilled in the art will appreciate that the methods, systems and components described herein may comprise, in whole or in part, a combination of analog and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the vehicle and/or one or more separate devices or systems. In that regard, such a node may comprise an electronic control unit (ECU) or any suitable electronic device, which may be a main or central node. It should also be noted that the these may further comprise or be arranged or configured to cooperate with any type of storage device or storage arrangement known in the art, which may for example be used for storing input or output data associated with the functions and/or operations described herein. The systems, components and methods described herein may further comprise any computer hardware and software and/or electrical hardware known in the art configured to enable communication therebetween.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims .

## Claims

1. A method for adapting vehicle interior conditions during autonomous driving, the method comprising:
determining there will be or has been a change in autonomous driving conditions; and
adjusting at least one interior feature of the vehicle according to the change or anticipated change in autonomous driving conditions.

2. The method of claim 1, wherein the step of determining there will be or has been a change in autonomous driving conditions comprises determining there has been or will be a change in an operational design domain in which the vehicle is operating.

3. The method of claim 2, wherein the step of adjusting at least one interior feature of the vehicle according to the change or anticipated change in autonomous driving conditions comprises
adjusting at least one interior feature of the vehicle according to the operational design domain to which the vehicle has or will be changed.

4. The method of any of the preceding claims, wherein the step of determining there will be or has been a change in autonomous driving conditions comprises determining there has been or will be: a change in environmental conditions outside of the vehicle and/or a change in vehicle condition during autonomous driving.

5. The method according to claim 4, wherein the environmental conditions relate to one or more of: traffic conditions, road conditions, light conditions, statistics related to certain stretches of roads, and pedestrian and/or non-vehicular activity.

6. The method of any of the preceding claims, wherein the step of adjusting at least one interior feature of the vehicle comprises adjusting one or more of the following: steering wheel, pedals, seats, tables, arm rests, lighting, display screens and entertainment systems.

7. The method of any of the preceding claims, wherein the step of adjusting at least one interior feature of the vehicle comprises adjusting permitted settings of one or more of the following: steering wheel, pedals, seats, tables, arm rests, lighting, display screens and entertainment systems.

8. The method of any of the preceding claims, and further comprising, prior to the step of adjusting at least one interior feature of the vehicle according to the change or anticipated change in autonomous driving conditions:
making a proposal to the user for adjustment of at least one interior feature of the vehicle according to the change or anticipated change in autonomous driving conditions, and
preferably further comprising receiving input from the user whether to proceed with the proposal.

9. The method of any of the preceding claims, and further comprising, prior to the step of adjusting at least one interior feature of the vehicle according to the change or anticipated change in autonomous driving conditions:
informing the user of that at least one interior feature of the vehicle will be adjusted.

10. A controller configured to perform the method of any of claims 1-9.

11. An autonomous driving system comprising:
an autonomous driving vehicle control system configured to operate a vehicle in a plurality of autonomous driving conditions;
at least one interior vehicle feature which is directly adjustable and/or has adjustable permitted settings;
wherein the autonomous driving vehicle control system is configured to:
determine there will be or has been a change in autonomous driving conditions; and
adjust at least one interior vehicle feature directly and/or adjust permitted settings of at least one interior vehicle feature based on the change in autonomous driving conditions.

12. The autonomous driving system of claim 11, wherein the plurality of autonomous driving conditions relate to operational design domains and/or environmental conditions outside of the vehicle.

13. The autonomous driving system of any of claims 11-12, wherein the at least one interior vehicle feature comprises one or more of: steering wheel, pedals, seats, tables, arm rests, lighting, display screens and entertainment systems.

14. The autonomous driving system of any of claims 11-13, and further comprising a user interface configured for one or more of: informing a user of an upcoming adjustment of at least one interior vehicle feature; providing a proposal to a user of available adjustment(s) within the current or upcoming autonomous driving conditions; allowing a user to accept or reject a proposal; and guiding a user through an or upcoming adjustment.

15. The autonomous driving system of any of claims 11-14, wherein the vehicle is associated with at least a first discrete autonomous driving condition and a second discrete autonomous driving condition, preferably first and second operational design domains;
wherein the first discrete autonomous driving condition is associated with a first range of allowable interior vehicle settings and the second discrete autonomous driving condition is associated with a second range of allowable interior vehicle settings; and
wherein upon changing from the first discrete autonomous driving condition to the second discrete autonomous driving condition, the vehicle changes or suggests a change from the first range of allowable interior vehicle settings to the second range of allowable interior vehicle settings.

16. A vehicle comprising the system of any of claims 11-15 and/or the controller of claim 10 and/or configured to perform the method of any of claims 1-9.
